# EUROPEAN PATENT SPECIFICATION

(11) **EP 2 886 340 B1**
(45) Date of publication and mention of the grant of the patent: **27.12.2017**
(21) Application number: 13868855.1
(22) Date of filing: 10.10.2013
(51) Int. Cl.: B32B 27/36, C08J 7/04

(54) **COATED FILM**
BESCHICHTETE FOLIE
FILM REVÊTU

(30) Priority: 28.12.2012 JP 2012286398
(43) Date of publication of application: 24.06.2015
(73) Proprietor: Mitsubishi Chemical Corporation, Tokyo (JP)
(72) Inventor: SATO, Takashi, Maibara-shi Shiga 521-0234 (JP); KAWASAKI, Taishi, Maibara-shi Shiga 521-0234 (JP); KATO, Yuzo, Maibara-shi Shiga 521-0234 (JP)
(74) Representative: Ter Meer Steinmeister & Partner
(86) International application number: PCT/JP2013/077582
(87) International publication number: WO 2014/103470

(56) References cited:
- EP-A1- 2 679 620
- EP-A1- 2 818 498
- WO-A1-2011/132542
- JP-A- 2004 307 684
- JP-A- 2007 055 217
- JP-A- 2009 155 408
- JP-A- 2009 155 409
- JP-A- 2009 178 955
- JP-A- 2012 172 057

## Description

### TECHNICAL FIELD

The present invention relates to a coated film, and more particularly, to a coated film that is suitably used as a member for a prism sheet or a microlens sheet used in a backlight unit of liquid crystal displays, etc., and has a good adhesion property to various surface functional layers. Meanwhile, the prism sheet or the microlens sheet comprising a transparent film and an optical functional layer formed on the transparent film which scatters or converges a light transmitted therethrough, for example, such as a prism layer or a microlens layer, is generally referred to as an optical functional film. One typical example of the "surface functional layers" described in the present invention is the optical functional layer in the optical functional film.

### BACKGROUND ART

In recent years, liquid crystal displays have been extensively used as a display device for TVs, personal computers, digital cameras, cellular phones, etc. In the liquid crystal displays, liquid crystal display units have no light-emitting function by themselves. Therefore, liquid crystal displays of the type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed of a reflection sheet, a light guide plate, a light diffusion sheet and a prism sheet which are successively laminated in this order. The flow of light through such edge light type liquid crystal displays is designed as follows. That is, the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is then entered into the prism sheet disposed next to the light diffusion sheet. The light entered into the prism sheet is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer may be further provided as an intermediate layer between the polyester film as the base material and the prism layer in order to enhance adhesion therebetween. It is known that the easy-bonding coating layer is formed of, for example, a polyester resin, an acrylic resin or a polyurethane resin (Patent Documents 1 to 3).

The prism layer may be produced, for example, by the following method. That is, an active energy ray-curable coating material is charged into a prism mold, and then a polyester film is placed on the coating material thus charged so as to interpose the coating material between the polyester film and the mold. Next, an active energy ray is irradiated to the active energy ray-curable coating material to cure the resin, and then the prism mold is removed from the cured resin, thereby obtaining the prism layer formed on the polyester film. In such a method, in order to form an accurate prism pattern on the prism layer, it is required to use a solvent-free type active energy ray-curable resin.
However, the solvent-free type resin tends to be deteriorated in effects of penetrating into an easy-bonding layer laminated on the polyester film and swelling the layer as compared to a solvent type resin and, therefore, tends to be insufficient in adhesion to the polyester film. In order to improve the adhesion property, a coating layer comprising a specific urethane resin has been proposed. However, even such a coating layer may still fail to exhibit a sufficient adhesion property to the solvent-free type resin (Patent Document 4).

In order to improve an adhesion property to the solvent-free type resin, there has been proposed a coating layer comprising a urethane resin and an oxazoline compound as main components (Patent Document 5). However, the conventionally proposed coating layer tends to be still insufficient in adhesion property to a prism layer being adaptable for a high brightness of prisms that can meet the current requirements such as reduction in number of backlight elements and suppression of a power consumption therefor, i.e., a high-refractive index prism layer.

### CITATION LIST

### PATENT LITERATURE

Patent Document 1: Japanese Patent Application Laid-Open (KOKAI) No. 8-281890
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 2-158633
Patent Document 5: Japanese Patent Application Laid-Open (KOKAI) No. 2010-13550

Laminated polyester films comprising a polyester film and a coating layer formed on at least one surface of the polyester film are disclosed in EP 2 679 620 A1 and EP 2 818 498 A1.

### SUMMARY OF INVENTION

### PROBLEMS TO BE SOLVED BY THE INVENTION

The present invention has been accomplished in view of the above conventional problems. An object of the present invention is to provide a coated film that can exhibit a good adhesion property to various resins, in particular, solvent-free type resins, and can be suitably used, for example, as a member for a prism sheet or a microlens sheet employed in a backlight unit for liquid crystal displays, etc.

### MEANS FOR SOLVING PROBLEMS

As a result of the present inventors' earnest study in view of the above problems, it has been found that the above problems can be readily solved by using a coated film having a specific structure. The present invention has been attained on the basis of this finding.

That is, in a first aspect the present invention relates to the use of a coated film for forming a surface functional layer on a surface of the coating layer by using an active energy ray-curable coating material, wherein the coated film comprises:
a polyester film and
a coating layer formed on at least one surface of the polyester film,
which coating layer is prepared from a coating solution comprising:
   a compound in the form of a polymer and being obtained by introducing a compound having a carbon-carbon double bond into the polymer and having a carbon-carbon double bond which is reactive with a carbon-carbon double bond in a compound forming the surface functional layer, and
   an active methylene blocked isocyanate compound.

In a second aspect of the present invention, there is provided a coated film comprising:
a polyester film,
a coating layer formed on at least one surface of the polyester film, and
a surface functional layer formed on a surface of the coating layer which is obtained using an active energy ray-curable coating material,
which coating layer is prepared from a coating solution comprising:
   a compound in the form of a polymer and being obtained by introducing a compound having a carbon-carbon double bond into the polymer and having a carbon-carbon double bond which is reactive with a carbon-carbon double bond in a compound forming the surface functional layer, and
   an active methylene blocked isocyanate compound, in which the carbon-carbon double bond moiety in the coating layer has a reactivity with the carbon-carbon double bond in the compound forming the surface functional layer.

### EFFECTS OF THE INVENTION

In accordance with the present invention, it is possible to provide a coated film having an excellent adhesion property to various surface functional layers such as a prism layer and a microlens layer. Therefore, the present invention has a high industrial value.

### PREFERRED EMBODIMENTS FOR CARRYING OUT THE INVENTION

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. A typical example of the polyesters is polyethylene terephthalate. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include a titanium compound, a germanium compound, an antimony compound, a manganese compound, an aluminum compound, a magnesium compound and a calcium compound. Of these compounds, the titanium compound and the germanium compound are preferably used because they can exhibit a high catalytic activity and are capable of effectively conducting polymerization even when used in a small amount, and can also provide a film having a high brightness owing to a less amount of the metals remaining in the film. Further, of these compounds, the titanium compound is more preferably used because the germanium compound is expensive.

The polyester film may also comprise an ultraviolet absorber in order to improve a weathering resistance of the film and prevent deterioration of liquid crystals and the like. The ultraviolet absorber is not particularly limited as long as it can withstand heat applied during a process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferably used. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the main purposes of imparting an easy-slipping property to the film and preventing occurrence of flaws in the film in the respective steps, particles may be blended in the polyester film. The kind of particles to be blended in the polyester film is not particularly limited. Specific examples of the particles include inorganic particles such as particles of silica, calcium carbonate, magnesium carbonate, barium carbonate, calcium sulfate, calcium phosphate, magnesium phosphate, kaolin, aluminum oxide and titanium oxide, and organic particles such as particles of acrylic reins, styrene resins, urea resins, phenol resins, epoxy resins and benzoguanamine resins, etc. Further, there may also be used deposited particles obtained by precipitating and finely dispersing a part of metal compounds such as a catalyst during the process for production of the polyester.

The shape of the particles used in the polyester film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the above particles is usually in the range of not more than 5 µm and preferably 0.01 to 3 µm. When the average particle diameter of the particles is more than 5 µm, the obtained film tends to have an excessively coarse surface roughness, thereby causing problems in the subsequent steps upon forming various surface functional layers or the like on the polyester film.

The content of the particles in the polyester film is usually not more than 5% by weight and preferably 0.0003 to 3% by weight. When the polyester film comprises no particles or a less amount of the particles, although the resulting film has a high transparency and therefore provides a good film, the film tends to be insufficient in slipping property. Therefore, in such a case, it is required to take a measure for enhancing a slipping property of the resulting film, for example, by incorporating particles into the coating layer formed thereon, etc. On the other hand, when the content of the particles in the polyester layer is more than 5% by weight, the resulting film tends to be insufficient in transparency.

The method of adding the particles to the polyester film is not particularly limited, and any conventionally known methods can be suitably used therefor. For example, the particles may be added at any optional stages in the process for production of the polyester. The particles are preferably added to the polyester after completion of the esterification reaction or transesterification reaction.

Meanwhile, the above polyester film may also comprise, in addition to the above particles and ultraviolet absorbers, known additives such as an antioxidant, an antistatic agent, a thermal stabilizer, a lubricant, a dye, a pigment, etc., if required.

The thickness of the polyester film is not particularly limited, and the polyester film may have any thickness as long as it can be produced while maintaining a suitable film shape. The thickness of the polyester film is usually in the range of 10 to 350 µm and preferably 25 to 300 µm.

Next, an example of the process of producing the polyester film used in the present invention is more specifically explained, although the present invention is not particularly limited thereto. That is, there may be adopted such a process in which pellets obtained by drying the above-mentioned raw polyester material are extruded from a die using a single-screw extruder in the form of a molten sheet, and the molten sheet is then cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn sheet is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the draw ratio in each of the two directions finally falls within the above-specified range.

In addition, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film of the present invention is explained. As the method of forming the coating layer, there may be used either an in-line coating method in which the surface of the polyester film is subjected to coating treatment during the film-forming step of the polyester film, or an off-line coating method in which the polyester film produced is once transferred to an outside of the film production system and subjected to coating treatment. Among these methods, the in-line coating method is preferably used because the coating layer can be produced simultaneously with formation of the polyester film and therefore at low costs.

For example, in the case of a sequential biaxial drawing process, the in-line coating treatment may be carried out, in particular, after completion of the longitudinal drawing but before initiation of the lateral drawing, though the present invention is not particularly limited thereto. When the coating layer is formed on the polyester film by the in-line coating method, the coating can be carried out simultaneously with formation of the polyester film, and the coating layer can be treated at a high temperature when subjecting the drawn polyester film to the heat-setting step, so that the resulting coated film can be enhanced in performances such as an adhesion property to various functional layers to be formed on the coating layer as well as a wet heat resistance of the resulting film, etc. Also, when the coating step is conducted before drawing the polyester film, the thickness of the coating layer may be changed by adjusting a draw ratio of the film, so that thin-film coating can be more easily accomplished as compared to the off-line coating method. Thus, by using the in-line coating method, in particular, by conducting the in-line coating method before the drawing, it is possible to produce a film suitable as the polyester film used in the present invention.

In the present invention, it is essentially required that the coating layer that is prepared from a coating solution comprising a compound having a carbon-carbon double bond that is reactive with a carbon-carbon double bond in a compound forming the surface functional layer, and an active methylene blocked isocyanate compound, is formed on at least one surface of the polyester film. The above compound having a carbon-carbon double bond is hereinafter referred to merely as a "reactive compound".

The coating layer formed in the present invention is capable of improving an adhesion property to various surface functional layers, in particular, a solvent-free type active energy ray-curable resin layer, for example, to form a prism layer or a microlens layer. In particular, the coating layer can be adapted for enhancing an adhesion property to a high-refractive index prism layer or microlens layer which aims at providing a high-brightness prism and tends to be deteriorated in adhesion to the coating layer.

The mechanism for enhancing the adhesion property is estimated as follows. That is, by irradiating an active energy ray upon forming the prism layer or microlens layer, a carbon-carbon double bond in the reactive compound contained in the coating layer of the film is reacted with a carbon-carbon double bond in a compound used for forming the prism layer or microlens layer to form a covalent bond therebetween.

The carbon-carbon double bond in the reactive compound used for forming the coating layer may be derived from conventionally known materials without any particular limitation as long as they are capable of reacting with the carbon-carbon double bond contained in the compound forming the prism layer or microlens layer. Examples of the materials include those materials having a structure including an acrylate group, a methacrylate group, a vinyl group, an ally group, etc.

Various substituent groups may be introduced into the carbon-carbon double bond in the reactive compound. Examples of the substituent groups may include an alkyl group such as a methyl group and an ethyl group, a phenyl group, a halogen group, an ester group, an amide group or a structure such as a conjugated double bond. In addition, the number of the substituent groups to be introduced is not particularly limited, and the substituent groups may be introduced into the carbon-carbon double bond to form either a mono-substituted compound, a di-substituted compound, a tri-substituted compound or a tetra-substituted compound. Of these substituted compounds, in view of a good reactivity, preferred is the mono-substituted compound or the di-substituted compound, and more preferred is the mono-substituted compound.

In view of a good reactivity with the carbon-carbon double bond in the compound forming the prism layer or microlens layer, the carbon-carbon double bond in the reactive compound is preferably in the form of an unsubstituted acrylate group or methacrylate group, and in particular, more preferably an unsubstituted acrylate group.

Also, the content of the carbon-carbon double bond moiety based on a whole amount of the reactive compound is usually not less than 0.5% by weight, preferably not less than 1.0% by weight, and more preferably not less than 1.5% by weight. When the content of the carbon-carbon double bond moiety based on a whole amount of the reactive compound is less than 0.5% by weight, the resulting coating layer tends to be insufficient in adhesion property to the prism layer or microlens layer, in particular, a resin having a high refractive index.

The reactive compound is in the form of a polymer in view of a good adhesion property of the resulting coating layer. The reactive compound is obtained by introducing a compound having a carbon-carbon double bond into various polymers. Specific examples of the polymers include polyurethane resins, polyester resins, acrylic resins, polyvinyl compounds (such as polyvinyl alcohol), polyalkylene glycols, polyalkylene imines, methyl cellulose, hydroxy cellulose, starches, etc. Among these polymers, in view of enhancing an adhesion property of the coating layer to the surface functional layer such as the prism layer or microlens layer, preferred are polyurethane resins, polyester resins and acrylic resins. Of these resins, more preferred are polyurethane resins, in particular, polyester-based polyurethane resins and polycarbonate-based polyurethane resins.

The polyurethane resin is usually produced by the reaction between a polyol and an isocyanate. Examples of the polyol include polyester polyols, polycarbonate polyols, polyether polyols, polyolefin polyols and acrylic polyols. These compounds may be used alone or in combination of any two or more thereof.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds having a derivative unit of a lactone compound such as polycaprolactone.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyether polyols include polyethylene glycol, polypropylene glycol, polyethylene/propylene glycol, polytetramethylene ether glycol and polyhexamethylene ether glycol.

In order to enhance adhesion to various surface functional layers, among the above polyols, preferred are polyester polyols and polycarbonate polyols, and more preferred are polyester polyols.

Examples of a polyisocyanate compound used for producing the polyurethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof. These polyisocyanate compounds may be in the form of a dimer, a trimer such as typically an isocyanuric ring, or a higher polymer.

When the polyurethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The polyester resins may be those polyester resins produced from the following polycarboxylic acids and polyhydroxy compounds. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfo-isophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethyleneoxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned compounds of the respective groups to polycondensation reaction by an ordinary method.

The acrylic resin used in the present invention is in the form of a polymer obtained from a polymerizable monomer having a carbon-carbon double bond such as, typically, an acrylic monomer and a methacrylic monomer. The polymer may be in the form of either a homopolymer or a copolymer. The polymer may also include a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers).

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing vinyl-based monomers such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl acetate and vinyl propionate; various silicon-containing polymerizable monomers such as γ-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

The reactive compound may be used in the form of not only a polymer, but also a monomer or an oligomer. As the monomer or oligomer, conventionally known monomers or oligomers may be used without any particular limitation as long as they have a carbon-carbon double bond. Examples of the monomer or oligomer include (meth)acrylate compounds and oligomers of the (meth)acrylate compounds.

Typical examples of the (meth)acrylate compounds include monofunctional (meth)acrylates, bifunctional (meth)acrylates and polyfunctional (meth)acrylates.

Examples of the monofunctional (meth)acrylates include alkyl (meth)acrylates such as methyl (meth)acrylate, n-butyl (meth)acrylate, 2-ethylhexyl (meth)acrylate, lauryl (meth)acrylate, stearyl (meth)acrylate, cyclohexyl (meth)acrylate and isobornyl (meth)acrylate; hydroxyalkyl (meth)acrylates such as hydroxyethyl (meth)acrylate, hydroxypropyl (meth)acrylate and hydroxybutyl (meth)acrylate; alkoxyalkyl (meth)acrylates such as methoxyethyl (meth)acrylate, ethoxyethyl (meth)acrylate, methoxypropyl (meth)acrylate and ethoxypropyl (meth)acrylate; aromatic (meth)acrylates such as benzyl (meth)acrylate and phenoxyethyl (meth)acrylate; amino group-containing (meth)acrylates such as diaminoethyl (meth)acrylate and diethylaminoethyl (meth)acrylate; ethyleneoxide-modified (meth)acrylates such as methoxyethylene glycol (meth)acrylate, phenoxypolyethylene glycol (meth)acrylate and phenyl phenol ethyleneoxide-modified (meth)acrylate; and glycidyl (meth)acrylate, tetrahydrofurfuryl (meth)acrylate and (meth)acrylic acid.

Examples of the bifunctional (meth)acrylates include alkanediol di(meth)acrylates such as 1,4-butanediol di(meth)acrylate, neopentyl glycol di(meth)acrylate, 1,6-hexanediol di(meth)acrylate, 1,9-nonanediol di(meth)acrylate and tricyclodecanedimethanol di(meth)acrylate; bisphenol-modified di(meth)acrylates such as bisphenol A ethyleneoxide-modified di(meth)acrylate and bisphenol F ethyleneoxide-modified di(meth)acrylate; and polyethylene glycol di(meth)acrylate, polypropylene glycol di(meth)acrylate, urethane di(meth)acrylate and epoxy di (meth)acrylate.

Examples of the polyfunctional (meth)acrylates include dipentaerythritol hexa(meth)acrylate, pentaerythritol tetra(meth)acrylate, ditrimethylol propane tetra(meth)acrylate, pentaerythritol tri(meth)acrylate, trimethylol propane tri(meth)acrylate, tetramethylol methane ethyleneoxide-modified tetra(meth)acrylate, isocyanuric acid-modified tri(meth)acrylates such as isocyanuric acid ethyleneoxide-modified tri(meth)acrylate and ε-caprolactone-modified tris(acryloxyethyl)isocyanurate, and urethane acrylates such as a pentaerythritol triacrylate hexamethylene diisocyanate urethane prepolymer, a pentaerythritol triacrylate toluene diisocyanate urethane prepolymer and a dipentaerythritol pentaacrylate hexamethylene diisocyanate urethane prepolymer.

The active methylene-blocked isocyanate compound used for forming the coating layer means a compound having such a structure that an isocyanate group of an isocyanate compound as a precursor thereof is protected with an active methylene compound, and may be used for enhancing adhesion of the coating layer to various surface functional layers, or improving a strength of the coating layer.

Examples of the isocyanate compound as a precursor of the active methylene-blocked isocyanate compound include an aliphatic isocyanate compound, an alicyclic isocyanate compound and an aromatic isocyanate compound. These isocyanate compounds are preferably used in the form of a compound having a plurality of isocyanate groups, i.e., a polyisocyanate compound, to produce an active methylene-blocked polyisocyanate compound.

Specific examples of the aliphatic polyisocyanate compound include polyisocyanate compounds derived from aliphatic diisocyanates such as tetramethylene diisocyanate, pentamethylene diisocyanate, hexamethylene diisocyanate, 2,2,4-trimethyl-1,6-diisocyanatohexane and lysine diisocyanate, lysine triisocyanate, 4-isocyanato-methyl-1,8-octamethylene diisocyanate, bis(2-isocyanatoethyl) 2-isocyanatoglutarate, and compounds derived from these isocyanate compounds. Among these aliphatic polyisocyanate compounds, from the viewpoint of good industrial availability, preferred is hexamethylene diisocyanate.

Specific examples of the alicyclic polyisocyanate compound include isophorone diisocyanate, 1,3-bis(isocyanatomethyl)cyclohexane, 4,4'-dicyclohexylmethane diisocyanate, norbornene diisocyanate, hydrogenated xylylene diisocyanate and compounds derived from these isocyanate compounds. Among these alicyclic polyisocyanate compounds, from the viewpoints of a good weathering resistance and a good industrial availability, preferred is isophorone diisocyanate.

Specific examples of the aromatic polyisocyanate compound include 2,4-tolylene diisocyanate, 2,6-tolylene diisocyanate, 4,4'-diphenylmethane diisocyanate, naphthylene diisocyanate, xylylene diisocyanate and compounds derived from these isocyanate compounds.

Among these polyisocyanate compounds, preferred are aliphatic polyisocyanate compounds and alicyclic polyisocyanate compounds because they are excellent in weathering resistance. Further, among the aliphatic polyisocyanate compounds, preferred are aliphatic polyisocyanate compounds derived from aliphatic diisocyanates, and more preferred is hexamethylene diisocyanate. These isocyanate compounds may be used alone or in combination of any two or more thereof.

The active methylene-blocked polyisocyanate compound may be synthesized by reacting an isocyanate group of a polyisocyanate compound with an active methylene-based blocking agent.

Examples of the active methylene-based blocking agent include an isobutanoyl acetic acid ester, an n-propanoyl acetic acid ester, an n-butanoyl acetic acid ester, an n-pentanoyl acetic acid ester, an n-hexanoyl acetic acid ester, a 2-ethyl-heptanoyl acetic acid ester, a malonic acid ester, an acetoacetic acid ester and acetyl acetone. Among these active methylene-based blocking agents, from the standpoints of an excellent low-temperature curability and an excellent storage stability even in the presence of water, preferred are an isobutanoyl acetic acid ester, an n-propanoyl acetic acid ester, an n-butanoyl acetic acid ester, an n-pentanoyl acetic acid ester, an n-hexanoyl acetic acid ester and a 2-ethyl-heptanoyl acetic acid ester; more preferred are an isobutanoyl acetic acid ester, an n-propanoyl acetic acid ester and an n-pentanoyl acetic acid ester; and still more preferred is an isobutanoyl acetic acid ester. Specific examples of the isobutanoyl acetic acid ester include methyl isobutanoyl acetate, ethyl isobutanoyl acetate, n-propyl isobutanoyl acetate, isopropyl isobutanoyl acetate, n-butyl isobutanoyl acetate, isobutyl isobutanoyl acetate, t-butyl isobutanoyl acetate, n-pentyl isobutanoyl acetate, n-hexyl isobutanoyl acetate, 2-ethylhexyl isobutanoyl acetate, phenyl isobutanoyl acetate and benzyl isobutanoyl acetate. Among these isobutanoyl acetic acid esters, preferred are methyl isobutanoyl acetate and ethyl isobutanoyl acetate. Specific examples of the n-propanoyl acetic acid ester include methyl n-propanoyl acetate, ethyl n-propanoyl acetate, isopropyl n-propanoyl acetate, n-butyl n-propanoyl acetate and t-butyl n-propanoyl acetate. Among these n-propanoyl acetic acid esters, preferred are methyl n-propanoyl acetate and ethyl n-propanoyl acetate. Specific examples of the n-pentanoyl acetic acid ester include methyl n-pentanoyl acetate, ethyl n-pentanoyl acetate, isopropyl n-pentanoyl acetate, n-butyl n-pentanoyl acetate and t-butyl n-pentanoyl acetate. Among these n-pentanoyl acetic acid esters, preferred are methyl n-pentanoyl acetate and ethyl n-pentanoyl acetate.

As the active methylene-blocked isocyanate compound, the aforementioned active methylene-based blocking agents may be used alone or in combination of any two or more thereof. Preferred examples of the active methylene-based blocking agents that may be used in combination with each other are dimethyl malonate and diethyl malonate from the standpoint of an excellent low-temperature curability thereof.

Upon the blocking reaction for production of the active methylene-blocked isocyanate compound, the aforementioned active methylene-based blocking agents may be used in combination with the existing blocking agents. Examples of the existing blocking agents include an oxime-based blocking agent, a pyrazole-based blocking agent, an alcohol-based blocking agent, an alkyl phenol-based blocking agent, a phenol-based blocking agent, a mercaptan-based blocking agent, an acid amide-based blocking agent, an acid imide-based blocking agent, an imidazole-based blocking agent, a urea-based blocking agent, an amine-based blocking agent, an imine-based blocking agent and a bisulfite-based blocking agent. These existing blocking agents may be used alone or in combination of any two or more thereof.

Examples of the oxime-based blocking agent include formaldoxime, acetaldoxime, acetone oxime, methyl ethyl ketoxime and cyclohexanone oxime. Examples of the pyrazole-based blocking agent include pyrazole, 3-methyl pyrazole and 3,5-dimethyl pyrazole. Examples of the alcohol-based blocking agent include methanol, ethanol, 2-propanol, n-butanol, sec-butanol, 2-ethyl-1-hexanol, 2-methoxyethanol, 2-ethoxyethanol and 2-butoxyethanol. Examples of the alkyl phenol-based blocking agent include monoalkyl phenols such as n-propyl phenol, isopropyl phenol, n-butyl phenol, sec-butyl phenol, t-butyl phenol, n-hexyl phenol, 2-ethylhexyl phenol, n-octyl phenol and n-nonyl phenol; and dialkyl phenols such as di-n-propyl phenol, diisopropyl phenol, isopropyl cresol, di-n-butyl phenol, di-t-butyl phenol, di-sec-butyl phenol, di-n-octyl phenol, di-2-ethylhexyl phenol and di-n-nonyl phenol. Examples of the phenol-based blocking agent include phenol, cresol, ethyl phenol, styrenated phenol and a hydroxybenzoic acid ester. Examples of the mercaptan-based blocking agent include butyl mercaptan and dodecyl mercaptan. Examples of the acid amide-based blocking agent include acetanilide, acetic amide, ε-caprolactam, δ-valerolactam and γ-butyrolactam. Examples of the acid imide-based blocking agent include succinic imide and maleic imide. Examples of the imidazole-based blocking agent include imidazole and 2-methyl imidazole. Examples of the urea-based blocking agent include urea, thiourea and ethylene urea. Examples of the amine-based blocking agent include diphenyl amine, aniline, carbazole, di-n-propylamine, diisopropylamine and isopropylethylamine. Examples of the imine-based blocking agent include ethylene imine and polyethylene imine.

The active methylene-blocked isocyanate compound preferably comprises a hydrophilic moiety in order to enhance a blending property thereof in an aqueous coating material. As a method of adding a hydrophilic moiety to the blocked isocyanate-based compound, there may be mentioned, for example, the method of reacting an isocyanate group of an isocyanate compound as a precursor thereof with an active hydrogen-containing hydrophilic compound.

Examples of the active hydrogen-containing hydrophilic compound include a polyethylene glycol-based compound, a carboxylic acid-containing compound, a sulfonic acid-containing compound and an amine-containing compound. These hydrophilic compounds may be used alone or in combination of any two or more thereof.

Examples of the polyethylene glycol-based compound include monoalkoxy polyethylene glycols, polyethylene glycol, polyoxypropylene polyoxyethylene copolymer diols and polyoxypropylene polyoxyethylene block polymer diols. Among these polyethylene glycols, preferred are monoalkoxy polyethylene glycols, in particular, monomethoxy polyethylene glycol and monoethoxy polyethylene glycol.

Examples of the carboxylic acid-containing compound include monohydroxycarboxylic acids, dihydroxycarboxylic acids and derivatives thereof. Among these carboxylic acid-containing compounds, preferred are monohydroxycarboxylic acids and dihydroxycarboxylic acids, and more preferred are monohydroxycarboxylic acids.

Specific examples of the carboxylic acid-containing compound include hydroxypivalic acid, 2,2-dimethylol propionic acid, 2,2-dimethylol butanoic acid, derivatives of polycaprolactone diols, polyether polyols, etc., obtained using these compounds as an initiator, and salts thereof.

Examples of the sulfonic acid-containing compound include aminoethylsulfonic acid, ethylene diamino-propyl-p-ethylsulfonic acid, 1,3-propylene diamine-p-ethylsulfonic acid, N,N-bis(2-hydroxyethyl)-2-aminoethanesulfonic acid, and salts thereof.

Examples of the amine-containing compound include hydroxy group-containing amino compounds. Specific examples of the hydroxy group-containing amino compounds include dimethyl ethanol amine and diethyl ethanol amine.

Meanwhile, the active methylene-blocked isocyanate compound used in the present invention may be designed to undergo the reaction during a drying step or a film-forming step in order to enhance a performance of the resulting coating layer. It is suggested that the coating layer comprises an unreacted active methylene-blocked isocyanate compound, compounds obtained after the reaction, or a mixture thereof.

Upon forming the coating layer, in order to improve an appearance of the obtained coating layer and enhance a transparency of the coating layer and an adhesion property thereof to various surface functional layers, various polymers may be used in combination with the aforementioned components.

Specific examples of the polymers include polyurethane resins, acrylic resins, polyester resins, polyvinyl compounds (such as polyvinyl alcohol), polyalkylene glycols, polyalkylene imines, methyl cellulose, hydroxy cellulose, starches, etc. Among these polymers, in view of enhancing an adhesion property of the coating layer to various surface functional layers, preferred are polyurethane resins, acrylic resins and polyester resins.

In addition, when forming the coating layer, in order to improve an appearance of the resulting coating layer and enhance a transparency of the coating layer and an adhesion property thereof to various surface functional layers, crosslinking agents other than the active methylene-blocked isocyanate compound may also be used in combination with the aforementioned compounds.

Examples of the crosslinking agents include an epoxy compound, an oxazoline compound, a melamine compound, a carbodiimide-based compound, an isocyanate-based compound other than the active methylene-blocked isocyanate compound, a silane coupling compound and the like. Of these compounds, from the viewpoint of improving an adhesion property of the coating layer, preferred are an epoxy compound, an oxazoline compound, a carbodiimide-based compound, and an isocyanate-based compound other than the active methylene-blocked isocyanate compound.

Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

The oxazoline compounds are preferably polymers having an oxazoline group which may be produced in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of a good industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing urea or the like to a part of melamine. Further, a catalyst may also be used in the above reaction to enhance a reactivity of the melamine compound.

The carbodiimide-based compound is in the form of a compound having one or more carbodiimide structures in a molecule thereof, and the preferred carbodiimide compound is a polycarbodiimide-based compound having two or more carbodiimide structures in a molecule thereof in view of a more excellent adhesion property or the like of the resulting coating layer.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve a water solubility or a water dispersibility of the polycarbodiimide-based compound, a surfactant or a hydrophilic monomer such as a polyalkyleneoxide, a quaternary ammonium salt of a dialkylaminoalcohol and a hydroxyalkyl sulfonic acid salt may be added thereto unless the addition thereof eliminates the effects of the present invention.

As the isocyanate-based compound other than the active methylene-blocked isocyanate compound, there may be used an isocyanate or a compound having an isocyanate derivative structure such as typically a blocked isocyanate. Examples of the isocyanate include various isocyanate compounds as described above.

When the isocyanate compound is used in the form of a blocked isocyanate, examples of blocking agents used for production thereof include the aforementioned blocking agents other than the active methylene-based blocking agents.

Meanwhile, these crosslinking agents are used for improving a performance of the coating layer by allowing the crosslinking agents to react with the compounds contained therein during a drying step or a film-forming step thereof. Therefore, it is estimated that the coating layer comprises an unreacted crosslinking agent, compounds obtained after the reaction, or a mixture thereof.

Also, in order to improve a slipping property and an anti-blocking property of the resulting film, particles are preferably used in combination with the aforementioned materials in the coating layer upon forming the coating layer.

The average particle diameter of the particles used in the coating layer is usually not more than 1.0 µm, preferably not more than 0.5 µm and more preferably not more than 0.2 µm from the viewpoint of a good transparency of the resulting film. In addition, in the case where it is necessary to further enhance the effect of improving a slipping property or an anti-blocking property of the resulting film, the above particles are preferably used in combination with particles having an average particle diameter larger than the thickness of the coating layer.

Examples of the particles used in the coating layer include inorganic particles such as particles of silica, alumina and metal oxides, and organic particles such as crosslinked polymer particles. In particular, from the viewpoints of a good dispersibility in the coating layer and a good transparency of the resulting coating film, silica particles are preferably used.

Further, upon forming the coating layer, there may also be used various additives such as a defoaming agent, a coatability improver, a thickening agent, an organic lubricant, an antistatic agent, an ultraviolet absorber, an antioxidant, a foaming agent, a dye and a pigment, if required, unless the subject matter of the present invention is adversely affected by addition of these additives.

The content of the reactive compound in the coating solution is usually in the range of 5 to 95% by weight, preferably 10 to 90% by weight and more preferably 20 to 80% by weight based on a total amount of whole non-volatile components in the coating solution. When the content of the reactive compound in the coating solution is out of the above-specified range, the resulting coating layer tends to be insufficient in adhesion property to the prism layer or microlens layer.

The content of the carbon-carbon double bond moiety in the reactive compound in the coating solution is usually not less than 0.1% by weight and preferably not less than 0.3% by weight based on a total amount of whole non-volatile components in the coating solution. When the content of the carbon-carbon double bond moiety in the reactive compound in the coating solution is out of the above-specified range, the resulting coating layer tends to be insufficient in adhesion property to the prism layer or microlens layer.

The content of the active methylene-blocked isocyanate compound in the coating solution is usually 1 to 95% by weight, preferably 5 to 85% by weight and more preferably 10 to 75% by weight based on a total amount of whole non-volatile components in the coating solution. When the content of the active methylene-blocked isocyanate compound in the coating solution is out of the above-specified range, the resulting coating layer tends to be insufficient in adhesion property to the prism layer or microlens layer.

The content of the particles in the coating solution is not specifically limited because the slipping property and anti-blocking property of the resulting film tend to vary depending upon a particle diameter of the particles and properties of the polyester film, and is usually not more than 25% by weight, preferably 3 to 15% by weight and more preferably 3 to 10% by weight based on a total amount of whole non-volatile components in the coating solution. When the content of the particles in the coating solution is more than 25% by weight, the resulting coating layer tends to be deteriorated in transparency or adhesion property.

The coated film of the present invention may also be provided, on its surface opposed to the surface on which the above coating layer is formed, with an additional coating layer. For example, in the case where a functional layer such as an anti-sticking layer, a light diffusion layer and a hard coat layer is to be formed on a surface of the polyester film which is opposed to the surface on which the prism layer or microlens layer is formed, the coating layer formed on the opposite surface of the polyester film is capable of enhancing an adhesion property to the functional layer. The coating layer formed on the opposite surface of the polyester film may comprise conventionally known components, for example, a polymer such as a polyester resin, an acrylic resin and a polyurethane resin, a crosslinking agent such as an oxazoline compound, an epoxy compound, a melamine compound, an isocyanate-based compound and a carbodiimide-based compound, etc. These components or materials may be respectively used alone or in combination of any two or more thereof. In addition, the coating layer formed on the opposite surface of the polyester film may be the aforementioned coating layer formed from the coating solution comprising the aforementioned reactive compound and the aforementioned active methylene-blocked isocyanate compound (i.e., the same coating layer may be formed on both side surfaces of the polyester film).

The analysis of the components contained in the coating layer may be conducted, for example, by analyzing methods such as TOF-SIMS, ESCA and fluorescent X-ray analysis.

When forming the coating layer by the in-line coating method, the coated film is preferably produced by the method in which a coating solution having a concentration of about 0.1 to about 50% by weight in terms of a solid content thereof is prepared as an aqueous solution or a water dispersion comprising a series of the aforementioned compounds, and the thus prepared coating solution is applied onto the polyester film. The coating solution may also comprise an organic solvent for the purpose of improving a dispersibility in water, a film-forming property, etc., unless the subject matter of the present invention is adversely affected by addition of the organic solvent. The organic solvents may be used alone, or may be appropriately used in the form of a mixture of any two or more thereof.

The film thickness of the coating layer is usually in the range of 0.002 to 1.0 µm, preferably 0.005 to 0.5 µm and more preferably 0.01 to 0.2 µm. When the film thickness of the coating layer is out of the above-specified range, the resulting coating layer tends to be deteriorated in adhesion property, coating appearance and anti-blocking property.

As the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

The polyester film constituting the coated film of the present invention may also be previously subjected to surface treatments such as corona treatment and plasma treatment.

The coating layer of the coated film according to the present invention is generally provided thereon with a prism layer or a microlens layer in order to improve a brightness of the film. In particular, it is possible to provide, on the coating layer, a high-refractive index resin layer required to attain a high brightness of the film which hardly exhibits a good adhesion property to the film. In recent years, in order to efficiently enhance a brightness of the film, there have been proposed prism layers with various shapes. In general, the prism layers have plural rows of prisms each having a triangular sectional shape which are arranged in parallel with each other. Also, there have been proposed microlens layers with various shapes. In general, the microlens layers have a structure in which a number of semispherical convex lenses are provided on a film. Both of the prism layer and the microlens layer may respectively have any conventionally known shapes.

The prism layer may have, for example, such a shape in which a thickness of the layer is 10 to 500 µm, rows of prisms have a pitch of 10 to 500 µm, and respective prisms have a triangular sectional shape having an apex angle of 40° to 100°.

The microlens layer may have, for example, such a shape in which a thickness of the layer is 10 to 500 µm, and respective lenses have a semispherical shape having a diameter of 10 to 500 µm. The shape of each lens of the microlens layer may also be a conical shape or a pyramidal shape.

As the materials used in the prism layer and the microlens layer, there may be employed conventionally known materials. Examples of the materials used in the prism layer and the microlens layer include active energy ray-curable resins such as, typically, (meth)acrylate-based resins. Examples of the compounds constituting the above resins generally include polyhydric alcohol components such as ethylene glycol, propylene glycol, tetramethylene glycol and hexamethylene glycol, and (meth)acrylate-based compounds having a bisphenol A structure, a urethane structure, a polyester structure, an epoxy structure, etc.

The refractive index of the active energy ray-curable resin layer is preferably as high as possible because there is such a tendency that the resin layer having a higher refractive index is capable of further enhancing a brightness of the resulting film, and is usually in the range of 1.56 to 1.65, preferably 1.57 to 1.64 and more preferably 1.58 to 1.63. When the refractive index of the active energy ray-curable resin layer is out of the above-specified range, the brightness of the resulting film tends to be hardly enhanced to a sufficient extent.

As the method for formulating the high-refractive index resin required to achieve a high brightness of the resulting film, there may be mentioned the methods in which a compound having many aromatic structures, a sulfur atom, a halogen atom and a metal compound are used in addition to the above general compounds. Among these methods, from the standpoint of a uniform refractive index of the prism layer or the microlens layer and from the environmental viewpoints, preferred are the methods using a compound having many aromatic structures or a sulfur atom.

Examples of the compound having many aromatic structures include compounds having a condensed polycyclic aromatic structure such as naphthalene, anthracene, phenanthrene, naphthacene, benzo[a]anthracene, benzo[a]phenanthrene, pyrene, benzo[c]phenanthrene and perylene; compounds having a biphenyl structure; and compounds having a fluorene structure.

Various substituent groups may be introduced into the biphenyl structure, the fluorene structure and the condensed polycyclic aromatic structure of the above compounds. In particular, the structures into which a substituent group comprising a benzene ring such as a phenyl group is introduced are preferred because they are capable of producing a layer having a higher refractive index. In addition, it is also possible to introduce an atom capable of enhancing a refractive index such as a sulfur atom and a halogen atom into the above structures. Further, in order to enhance an adhesion property to the coating layer, various functional groups such as an ester group, an amide group, a hydroxyl group, an amino group and an ether group may be introduced into the above structures.

### EXAMPLES

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi High-Technologies Corp.; acceleration voltage: 100 V), the coating layer was observed to measure particle diameters of 10 particles therein and calculate an average particle diameter thereof as an average value of the thus measured ten particle diameters.

### (3) Weight of carbon-carbon double bond moiety in compound having carbon-carbon double bond:

The weight of a carbon-carbon double bond moiety in a compound having a carbon-carbon double bond was calculated from a molecular weight and a number of carbon-carbon double bonds thereof, or calculated from assignments of respective peaks observed in ¹HNMR and ¹³CNMR. The NMR measurement was conducted after drying the compound to be measured under reduced pressure using NMR ("AVANCE III 600" manufactured by Bruker Biospin K.K.).

### (4) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.; acceleration voltage: 100 V). The measurement of the film thickness of the coating layer was conducted at 10 positions of the coating layer, and an average value of the thus measured 10 thickness values was defined as a thickness of the coating layer.

### (5) Method for evaluating adhesion property:

A composition comprising 40 parts by weight of 2-biphenoxyethyl acrylate, 10 parts by weight of 4,4'-(9-fluorenylidene) bis(2-phenoxyethyl acrylate), 37 parts by weight of ethylene glycol-modified bisphenol A acrylate (ethylene glycol chains: 8), 10 parts by weight of trimethylol propane triacrylate and 3 parts by weight of diphenyl(2,4,6-trimethylbenzoyl)phosphine oxide was placed in a mold for forming a prism layer in which a large number of rows of prism-shaped mold cavities each having an apex angle of 65° were arranged with a pitch of 50 µm in parallel with each other. Then, the coated film was overlapped on the resin in the mold such that the coating layer of the coated film came into contact with the resin. The resin composition was uniformly spread using a roller, and then an ultraviolet ray was irradiated thereover using an ultraviolet irradiation apparatus to cure the resin. Next, the resulting film was released from the mold to obtain a film on which the prism layer (refractive index = 1.58) was formed. The surface of the resulting film on which the prism layer was formed, was dipped in boiled water for 1 hr, and the prism layer was cut to form 10 x 10 cross-cuts thereon. Then, a 18 mm-wide tape ("Cellotape (registered trademark) CT-18" produced by Nichiban Co., Ltd.) was attached onto the thus cut surface of the prism layer, and then rapidly peeled off therefrom at a peel angle of 180°. Then, the surface of the prism layer from which the tape was peeled off was observed to measure an area of the layer peeled off together with the tape. The evaluation ratings are as follows (adhesion property 1).
A: Peeled area of the layer was less than 5%.
B: Peeled area of the layer was not less than 5% but less than 20%.
C: Peeled area of the layer was not less than 20% but less than 50%.
D: Peeled area of the layer was not less than 50%.

Furthermore, a composition comprising 20 parts by weight of 2-biphenoxyethyl acrylate, 27 parts by weight of 4,4'-(9-fluorenylidene) bis(2-phenoxyethyl acrylate), 50 parts by weight of ethylene glycol-modified bisphenol A acrylate (ethylene glycol chains: 8) and 3 parts by weight of diphenyl(2,4,6-trimethylbenzoyl)phosphine oxide (refractive index of prism layer: 1.60) was evaluated for an adhesion property thereof in the same manner as defined above (adhesion property 2).

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester as produced, were subjected to esterification reaction at 225°C in a nitrogen atmosphere. Successively, orthophosphoric acid and germanium dioxide in amounts of 3500 ppm and 70 ppm, respectively, based on the polyester as produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

The same procedure as used in the above method for producing the polyester (A) was conducted except that silica particles having an average particle diameter of 2 µm were added in an amount of 0.3 part by weight prior to the melt-polycondensation, thereby obtaining a polyester (C).

Examples of the compounds constituting the coating layer are as follows.

### (Examples of compounds)

### ·Polyurethane resin having carbon-carbon double bond: (IA)

Water dispersion of a polyurethane resin comprising a hydroxyethyl acrylate unit, a dicyclohexylmethane diisocyanate unit, a hexamethylene diisocyanate trimer unit, a caprolactone unit, an ethylene glycol unit and a dimethylol propanoic acid unit at a ratio of 18:12:22:26:18:4 (mol%) and having a carbon-carbon double bond moiety content of 2.0% by weight.

### ·Polyurethane resin having carbon-carbon double bond: (IB)

Water dispersion of a polyurethane resin comprising a hydroxyethyl acrylate unit, a dicyclohexylmethane diisocyanate unit, a hexamethylene diisocyanate trimer unit, a caprolactone unit, an ethylene glycol unit and a dimethylol propanoic acid unit at a ratio of 23:12:22:24:15:4 (mol%) and having a carbon-carbon double bond moiety content of 2.6% by weight.

### ·Polyurethane resin having carbon-carbon double bond: (IC)

Water dispersion of a polyurethane resin comprising a hydroxyethyl acrylate unit, a dicyclohexylmethane diisocyanate unit, a hexamethylene diisocyanate trimer unit, a caprolactone unit, an ethylene glycol unit and a dimethylol propanoic acid unit at a ratio of 8:10:20:38:20:4 (mol%) and having a carbon-carbon double bond moiety content of 1.0% by weight.

### ·Polyurethane resin having carbon-carbon double bond: (ID)

Water dispersion of a polyurethane resin comprising a hydroxyethyl acrylate unit, a dicyclohexylmethane diisocyanate unit, a hexamethylene diisocyanate trimer unit, a caprolactone unit, an ethylene glycol unit and a dimethylol propanoic acid unit at a ratio of 6:10:20:38:22:4 (mol%) and having a carbon-carbon double bond moiety content of 0.7% by weight.

### ·Polyurethane resin having no carbon-carbon double bond: (IE)

Water dispersion of a polyester-based polyurethane resin comprising an isophorone diisocyanate unit, a terephthalic acid unit, an isophthalic acid unit, an ethylene glycol unit, a diethylene glycol unit and a dimethylol propionic acid unit at a ratio of 12:19:18:21:25:5 (mol%).

### ·Polyurethane resin having no carbon-carbon double bond: (IF)

Water dispersion of a polyurethane resin comprising a polycarbonate polyol having a number-average molecular weight of 2000 which was produced from 1,6-hexanediol and diethyl carbonate, an isophorone diisocyanate unit, a butanediol unit, a polyethylene glycol unit having a molecular weight of 400 and a dimethylol propionic acid unit at a ratio of 20:48:18:4:10 (mol%).

### ·Active methylene-blocked polyisocyanate: (IIA)

### (I) Blocked polyisocyanate produced by the following method:

One thousand parts by weight of hexamethylene diisocyanate were stirred at 60°C, and 0.1 part by weight of tetramethyl ammonium caprylate as a catalyst was added thereto. After 4 hr, 0.2 part by weight of phosphoric acid was added to the reaction solution to terminate the reaction, thereby obtaining an isocyanurate-type polyisocyanate composition. One hundred parts by weight of the thus obtained isocyanurate-type polyisocyanate composition, 42.3 parts by weight of methoxy polyethylene glycol having a number-average molecular weight of 400 and 29.5 parts by weight of propylene glycol monomethyl ether acetate were charged into a reactor and held therein at 80°C for 7 hr. Thereafter, while the resulting reaction solution was held at 60°C, 35.8 parts by weight of methyl isobutanoyl acetate, 32.2 parts by weight of diethyl malonate and 0.88 part by weight of a 28% methanol solution of sodium methoxide were added thereto, followed by allowing the resulting mixture to stand for 4 hr. In addition, 58.9 parts by weight of n-butanol were added to the mixture, and then the resulting reaction solution was held at 80°C for 2 hr, and thereafter 0.86 part by weight of 2-ethylhexyl acid phosphate was added thereto, thereby obtaining a blocked polyisocyanate.

### ·Epoxy compound: (IIB)

Polyglycerol polyglycidyl ether "DECONAL EX-521" (produced by Nagase Chemtex Co., Ltd.)

### ·Melamine compound: (IIC)

Hexamethoxymethylol melamine

### ·Oxazoline compound: (IID)

Acrylic polymer having an oxazoline group and a polyalkyleneoxide chain "EPOCROSS WS-500" (produced by Nippon Shokubai Co., Ltd.; polymer of a type comprising 1-methoxy-2-propanol solvent in an amount of about 38% by weight).

### ·Carbodiimide-based compound: (IIE)

Polycarbodiimide compound "CARBODILITE SV-02" (produced by Nisshinbo Co., Ltd.).

### ·Isocyanate-based compound: (IIF)

Aqueous blocked isocyanate-based compound comprising a blocked isocyanate comprising a hexamethylene diisocyanate trimer unit, a methoxy polyethylene glycol unit having a number-average molecular weight of 1400 and a methyl ethyl ketone oxime unit at a ratio of 30:2:68 (mol%), and a polyurethane resin obtained by neutralizing a prepolymer comprising a polycarbonate polyol unit having a number-average molecular weight of 2000 which was produced from 1,6-hexanediol and diethyl carbonate, an isophorone diisocyanate unit, a trimethylol propane unit and a dimethylol propionic acid unit at a ratio of 24:55:3:18 (mol%) with triethylamine and then subjecting the resulting neutralized product to chain extension reaction using diethylene triamine.

### ·Acrylic resin: (IIIA)

Water dispersion of an acrylic resin comprising an ethyl acrylate unit, an n-butyl acrylate unit, a methyl methacrylate unit, an N-methylol acrylamide unit, and an acrylic acid unit at a ratio of 67:17:10:2:4 (mol%) (emulsifier: anionic surfactant).

### ·Polyester resin: (IIIB)

Terephthalic acid: isophthalic acid: 5-sodium sulfoisophthalic acid: ethylene glycol: 1,4-butanediol: diethylene glycol = 56:40:4:70:20:10 (mol%).

### ·Particles: (IV)

Silica sol having an average particle diameter of 0.07 µm

### Example 1:

A mixed raw material obtained by mixing the polyesters (A), (B) and (C) in amounts of 89%, 5% and 6%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 1:18:1 as output), followed by cooling and solidifying the thus extruded sheet on the chilled roll, thereby obtaining an undrawn sheet. Next, the thus obtained undrawn sheet was drawn utilizing a difference between peripheral speeds of rolls at a film temperature of 85°C at a draw ratio of 3.4 times in a longitudinal direction thereof. Thereafter, a coating solution 1 shown in the below-mentioned Table 1 was applied on both surfaces of the thus obtained longitudinally drawn sheet. Then, the resulting coated sheet was introduced into a tenter where the sheet was drawn at 120°C at a draw ratio of 4.0 times in a lateral direction thereof and then heat-set at 225°C.

Thereafter, the obtained drawn sheet was relaxed by 2% in a lateral direction thereof, thereby obtaining a polyester film having a thickness of 125 µm which was provided on both surfaces thereof with a coating layer having a thickness of 0.01 µm (after dried). As a result of evaluating the thus obtained polyester film, it was confirmed that the film exhibited a good adhesion property to a prism layer. The properties of the film are shown in Table 2 below.

### Examples 2 to 16:

The same procedure as in Example 1 was conducted except that the coating agent composition was changed to those shown in Table 1, thereby obtaining polyester films. As a result of evaluating the thus finished coated films, it was confirmed that properties of the coated films were as shown in Table 2, i.e., the coated films exhibited a good adhesion property.

### Comparative Examples 1 and 9:

The same procedure as in Example 1 was conducted except that the coating agent composition was changed to those shown in Table 1, thereby obtaining polyester films. As a result of evaluating the thus finished coated films, it was confirmed that properties of the coated films were as shown in Table 2, i.e., the coated films exhibited a poor adhesion property.

**Table 1**

| Coating solutions | Coating agent composition (wt%) | | | | | | | |
|---|---|---|---|---|---|---|---|---|
| | IA | IB | IC | ID | IE | IF | IIA | IIB |
| 1 | 60 | 0 | 0 | 0 | 0 | 0 | 34 | 0 |
| 2 | 20 | 0 | 0 | 0 | 0 | 0 | 74 | 0 |
| 3 | 80 | 0 | 0 | 0 | 0 | 0 | 14 | 0 |
| 4 | 0 | 60 | 0 | 0 | 0 | 0 | 34 | 0 |
| 5 | 0 | 0 | 60 | 0 | 0 | 0 | 34 | 0 |
| 6 | 0 | 0 | 0 | 60 | 0 | 0 | 34 | 0 |
| 7 | 30 | 0 | 0 | 0 | 0 | 0 | 34 | 0 |
| 8 | 30 | 0 | 0 | 0 | 30 | 0 | 34 | 0 |
| 9 | 30 | 0 | 0 | 0 | 0 | 30 | 34 | 0 |
| 10 | 60 | 0 | 0 | 0 | 0 | 0 | 14 | 20 |
| 11 | 60 | 0 | 0 | 0 | 0 | 0 | 14 | 0 |
| 12 | 60 | 0 | 0 | 0 | 0 | 0 | 14 | 0 |
| 13 | 60 | 0 | 0 | 0 | 0 | 0 | 14 | 0 |
| 14 | 94 | 0 | 0 | 0 | 0 | 0 | 0 | 0 |
| 15 | 0 | 0 | 0 | 0 | 0 | 0 | 94 | 0 |
| 16 | 0 | 0 | 0 | 0 | 0 | 0 | 34 | 0 |
| 17 | 0 | 0 | 0 | 0 | 0 | 0 | 34 | 0 |
| 18 | 0 | 0 | 0 | 0 | 60 | 0 | 34 | 0 |
| 19 | 0 | 0 | 0 | 0 | 60 | 0 | 0 | 0 |
| 20 | 0 | 0 | 0 | 0 | 0 | 60 | 0 | 0 |
| 21 | 60 | 0 | 0 | 0 | 0 | 0 | 0 | 34 |
| 22 | 60 | 0 | 0 | 0 | 0 | 0 | 0 | 0 |

| IIC | IID | IIE | IIF | IIIA | IIIB | | IV | |
|---|---|---|---|---|---|---|---|---|
| 1 | 0 | 0 | 0 | 0 | 0 | 0 | 6 | |
| 2 | 0 | 0 | 0 | 0 | 0 | 0 | 6 | |
| 3 | 0 | 0 | 0 | 0 | 0 | 0 | 6 | |
| 4 | 0 | 0 | 0 | 0 | 0 | 0 | 6 | |
| 5 | 0 | 0 | 0 | 0 | 0 | 0 | 6 | |
| 6 | 0 | 0 | 0 | 0 | 0 | 0 | 6 | |
| 7 | 0 | 0 | 0 | 0 | 30 | 0 | 6 | |
| 8 | 0 | 0 | 0 | 0 | 0 | 0 | 6 | |
| 9 | 0 | 0 | 0 | 0 | 0 | 0 | 6 | |
| 10 | 0 | 0 | 0 | 0 | 0 | 0 | 6 | |
| 11 | 0 | 20 | 0 | 0 | 0 | 0 | 6 | |
| 12 | 0 | 0 | 20 | 0 | 0 | 0 | 6 | |
| 13 | 0 | 0 | 0 | 20 | 0 | 0 | 6 | |
| 14 | 0 | 0 | 0 | 0 | 0 | 0 | 6 | |
| 15 | 0 | 0 | 0 | 0 | 0 | 0 | 6 | |
| 16 | 0 | 0 | 0 | 0 | 60 | 0 | 6 | |
| 17 | 0 | 0 | 0 | 0 | 0 | 60 | 6 | |
| 18 | 0 | 0 | 0 | 0 | 0 | 0 | 6 | |
| 19 | 0 | 34 | 0 | 0 | 0 | 0 | 6 | |
| 20 | 0 | 34 | 0 | 0 | 0 | 0 | 6 | |
| 21 | 0 | 0 | 0 | 0 | 0 | 0 | 6 | |
| 22 | 34 | 0 | 0 | 0 | 0 | 0 | 6 | |

**Table 2**

| Examples and Comparative Examples | Coating solution | Thickness (µm) | Adhesion property 1 | Adhesion property 2 |
|---|---|---|---|---|
| Example 1 | 1 | 0.01 | A | A |
| Example 2 | 1 | 0.02 | A | A |
| Example 3 | 1 | 0.03 | A | A |
| Example 4 | 1 | 0.06 | A | A |
| Example 5 | 2 | 0.02 | A | A |
| Example 6 | 3 | 0.02 | A | A |
| Example 7 | 4 | 0.02 | A | A |
| Example 8 | 5 | 0.02 | A | A |
| Example 9 | 6 | 0.02 | A | B |
| Example 10 | 7 | 0.02 | A | A |
| Example 11 | 8 | 0.02 | A | A |
| Example 12 | 9 | 0.02 | A | A |
| Example 13 | 10 | 0.02 | A | A |
| Example 14 | 11 | 0.02 | A | A |
| Example 15 | 12 | 0.02 | A | A |
| Example 16 | 13 | 0.02 | A | A |
| Comp. Example 1 | 14 | 0.02 | D | D |
| Comp. Example 2 | 15 | 0.02 | D | D |
| Comp. Example 3 | 16 | 0.02 | D | D |
| Comp. Example 4 | 17 | 0.02 | D | D |
| Comp. Example 5 | 18 | 0.02 | D | D |
| Comp. Example 6 | 19 | 0.02 | D | D |
| Comp. Example 7 | 20 | 0.02 | C | C |
| Comp. Example 8 | 21 | 0.02 | D | D |
| Comp. Example 9 | 22 | 0.02 | C | D |

### INDUSTRIAL APPLICABILITY

The coated film of the present invention can be suitably used in the applications in which a good adhesion property to a surface functional layer such as a prism layer or a microlens layer, etc., is required, for example, in a backlight unit for liquid crystal displays, etc.

## Claims

1. Use of a coated film for forming a surface functional layer on a surface of a coating layer by using an active energy ray-curable coating material, wherein the coated film comprises:
a polyester film and
a coating layer formed on at least one surface of the polyester film,
which coating layer is prepared from a coating solution comprising:
a compound in the form of a polymer and being obtained by introducing a compound having a carbon-carbon double bond into the polymer and having a carbon-carbon double bond which is reactive with a carbon-carbon double bond in a compound forming the surface functional layer, and
an active methylene blocked isocyanate compound.

2. Use according to claim 1, wherein the carbon-carbon double bond moiety of the compound having a carbon-carbon double bond is derived from at least one group selected from the group consisting of an acrylate group, a methacrylate group, a vinyl group and an allyl group.

3. Use according to claim 1 or 2, wherein the active methylene blocked isocyanate compound is obtained from a polyisocyanate compound as a precursor.

4. Use according to any one of claims 1 to 3, wherein the active energy ray-curable coating material is a solvent-free type active energy ray-curable coating material.

5. Use according to any one of claims 1 to 4, wherein the surface functional layer is an optical functional layer.

6. Use according to claim 5, wherein the optical functional layer is a microlens layer or a prism layer.

7. A coated film comprising:
a polyester film,
a coating layer formed on at least one surface of the polyester film, and
a surface functional layer formed on a surface of the coating layer which is obtained using an active energy ray-curable coating material,
which coating layer is prepared from a coating solution comprising:
a compound in the form of a polymer and being obtained by introducing a compound having a carbon-carbon double bond into the polymer and having a carbon-carbon double bond which is reactive with a carbon-carbon double bond in a compound forming the surface functional layer, and
an active methylene blocked isocyanate compound,
in which the carbon-carbon double bond moiety in the coating layer has a reactivity with the carbon-carbon double bond in the compound forming the surface functional layer.

8. The coated film according to claim 7, wherein the carbon-carbon double bond moiety of the compound having a carbon-carbon double bond is derived from at least one group selected from the group consisting of an acrylate group, a methacrylate group, a vinyl group and an allyl group.

9. The coated film according to claim 7 or 8, wherein the active methylene blocked isocyanate compound is obtained from a polyisocyanate compound as a precursor.

10. The coated film according to any one of claims 7 to 9, wherein the active energy ray-curable coating material is a solvent-free type active energy ray-curable coating material.

11. The coated film according to any one of claims 7 to 10, wherein the surface functional layer is an optical functional layer.

12. The coated film according to claim 11, wherein the optical functional layer is a microlens layer or a prism layer.

## Patentansprüche

1. Verwendung einer beschichteten Folie zur Bildung einer oberflächenfunktionellen Schicht auf einer Oberfläche einer Überzugsschicht durch Verwendung eines Aktivenergiestrahl-härtbaren Beschichtungsmaterials, wobei die beschichtete Folie umfasst:
eine Polyesterfolie und
eine auf mindestens einer Oberfläche der Polyesterfolie gebildete Überzugsschicht,
welche Überzugsschicht hergestellt wird aus einer Beschichtungslösung, umfassend:
eine Verbindung in der Form eines Polymers, erhalten durch Einführen einer Verbindung mit einer Kohlenstoff-Kohlenstoff-Doppelbindung in das Polymer und mit einer Kohlenstoff-Kohlenstoff-Doppelbindung, welche mit einer Kohlenstoff-Kohlenstoff-Doppelbindung in einer die oberflächenfunktionelle Schicht bildenden Verbindung reaktiv ist, und
eine Aktivmethylen-blockierte Isocyanatverbindung.

2. Verwendung nach Anspruch 1, wobei die Kohlenstoff-Kohlenstoff-Doppelbindungeinheit der Verbindung mit einer Kohlenstoff-Kohlenstoff-Doppelbindung abgeleitet ist aus mindestens einer Gruppe, gewählt aus der Gruppe, bestehend aus einer Acrylatgruppe, einer Methacrylatgruppe, einer Vinylgruppe und einer Allylgruppe.

3. Verwendung nach Anspruch 1 oder 2, wobei die Aktivmethylen-blockierte Isocyanatverbindung aus einer Polyisocyanatverbindung als einem Vorläufer erhalten wird.

4. Verwendung nach mindestens einem der Ansprüche 1 bis 3, wobei das Aktivenergiestrahl-härtbare Beschichtungsmaterial ein Aktivenergiestrahl-härtbares Beschichtungsmaterial vom lösungsmittelfreien Typ ist.

5. Verwendung nach mindestens einem der Ansprüche 1 bis 4, wobei die oberflächenfunktionelle Schicht eine optisch funktionelle Schicht ist.

6. Verwendung nach Anspruch 5, wobei die optisch funktionelle Schicht eine Mikrolinsenschicht oder eine Prismaschicht ist.

7. Beschichtete Folie, umfassend:
eine Polyesterfolie,
eine auf mindestens einer Oberfläche der Polyesterfolie gebildete Überzugsschicht,
und
eine auf einer Oberfläche der Überzugsschicht gebildete, oberflächenfunktionelle Schicht, welche erhalten wird unter Verwendung eines Aktivenergiestrahl-härtbaren Beschichtungsmaterials,
welche Überzugsschicht hergestellt wird aus einer Beschichtungslösung, umfassend:
eine Verbindung in der Form eines Polymers, erhalten durch Einführen einer Verbindung mit einer Kohlenstoff-Kohlenstoff-Doppelbindung in das Polymer und mit einer Kohlenstoff-Kohlenstoff-Doppelbindung, welche mit einer Kohlenstoff-Kohlenstoff-Doppelbindung in einer die oberflächenfunktionelle Schicht bildenden Verbindung reaktiv ist, und
eine Aktivmethylen-blockierte Isocyanatverbindung,
wobei die Kohlenstoff-Kohlenstoff-Doppelbindungseinheit in der Überzugsschicht eine Reaktivität aufweist gegenüber der Kohlenstoff-Kohlenstoff-Doppelbindung in der die oberflächenfunktionelle Schicht bildenden Verbindung.

8. Beschichtete Folie nach Anspruch 7, wobei die Kohlenstoff-Kohlenstoff-Doppelbindungseinheit der Verbindung mit einer Kohlenstoff-Kohlenstoff-Doppelbindung abgeleitet ist aus mindestens einer Gruppe, gewählt aus der Gruppe, bestehend aus einer Acrylatgruppe, einer Methacrylatgruppe, einer Vinylgruppe und einer Allylgruppe.

9. Beschichtete Folie nach Anspruch 7 oder 8, wobei die Aktivmethylen-blockierte Isocyanatverbindung aus einer Polyisocyanatverbindung als einem Vorläufer erhalten wird.

10. Beschichtete Folie nach mindestens einem der Ansprüche 7 bis 9, wobei das Aktivenergiestrahl-härtbare Beschichtungsmaterial ein Aktivenergiestrahl-härtbares Beschichtungsmaterial vom lösungsmittelfreien Typ ist.

11. Beschichtete Folie nach mindestens einem der Ansprüche 7 bis 10, wobei die oberflächenfunktionelle Schicht eine optisch funktionelle Schicht ist.

12. Beschichtete Folie nach Anspruch 11, wobei die optisch funktionelle Schicht eine Mikrolinsenschicht oder eine Prismaschicht ist.

## Revendications

1. Utilisation d'un film revêtu pour former une couche fonctionnelle de surface sur une surface d'une couche de revêtement en utilisant un matériau de revêtement durcissable par rayonnement d'énergie actif, dans lequel le film revêtu comprend :
un film de polyester et
une couche de revêtement formée sur au moins une surface du film de polyester,
laquelle couche de revêtement est préparée à partir d'une solution de revêtement comprenant:
un composé sous la forme d'un polymère et qui est obtenu en introduisant un composé ayant une double liaison carbone-carbone dans le polymère ayant une double liaison carbone-carbone qui réagit avec une double liaison carbone-carbone dans un composé formant la couche fonctionnelle de surface, et
un composé isocyanate bloqué de méthylène actif.

2. Utilisation selon la revendication 1, dans laquelle le groupement à double liaison carbone-carbone du composé ayant une double liaison carbone-carbone est dérivé d'au moins un groupe choisi parmi le groupe constitué par un groupe acrylate, un groupe méthacrylate, un groupe vinyle et un groupe allyle.

3. Utilisation selon la revendication 1 ou 2, dans laquelle le composé isocyanate bloqué de méthylène actif est obtenu à partir d'un composé de polyisocyanate en tant que précurseur.

4. Utilisation selon l'une quelconque des revendications 1 à 3, dans laquelle le matériau de revêtement durcissable aux rayons d'énergie actif est un matériau de revêtement durcissable par rayonnement d'énergie actif du type sans solvant.

5. Utilisation selon l'une quelconque des revendications 1 à 4, dans laquelle la couche fonctionnelle de surface est une couche fonctionnelle optique.

6. Utilisation selon la revendication 5, dans laquelle la couche fonctionnelle optique est une couche de microlentille ou une couche de prisme.

7. Un film revêtu comprenant:
un film de polyester,
une couche de revêtement formée sur au moins une surface du film de polyester, et
une couche fonctionnelle de surface formée sur une surface de la couche de revêtement qui est obtenue en utilisant un matériau de revêtement durcissable par rayonnement d'énergie actif,
laquelle couche de revêtement est préparée à partir d'une solution de revêtement comprenant:
un composé sous la forme d'un polymère et étant obtenu en introduisant un composé ayant une double liaison carbone-carbone dans le polymère et ayant une double liaison carbone-carbone qui réagit avec une double liaison carbone-carbone dans un composé formant la couche fonctionnelle de surface, et
un composé isocyanate bloqué de méthylène actif,
dans lequel le groupement de double liaison carbone-carbone dans la couche de revêtement a une réactivité avec la double liaison carbone-carbone dans le composé formant la couche fonctionnelle de surface.

8. Le film revêtu selon la revendication 7, dans lequel le groupement de double liaison carbone-carbone du composé ayant une double liaison carbone-carbone est dérivée d'au moins un groupe choisi parmi le groupe constitué par un groupe acrylate, un groupe méthacrylate, un groupe vinyle et un groupe allyle.

9. Le film revêtu selon la revendication 7 ou 8, dans lequel le composé isocyanate bloqué de méthylène actif est obtenu à partir d'un composé de polyisocyanate en tant que précurseur.

10. Le film revêtu selon l'une quelconque des revendications 7 à 9, dans lequel le matériau de revêtement durcissable au rayonnement d'énergie actif est un matériau de revêtement durcissable par rayonnement d'énergie actif du type sans solvant.

11. Le film revêtu selon l'une quelconque des revendications 7 à 10, dans lequel la couche fonctionnelle de surface est une couche fonctionnelle optique.

12. Le film revêtu selon la revendication 11, dans lequel la couche fonctionnelle optique est une couche de microlentille ou une couche de prisme.
